(19) Europäisches Patentamt / European Patent Office / Office européen des brevets

(11) **EP 4 503 305 A1**

(12) **EUROPEAN PATENT APPLICATION**
published in accordance with Art. 153(4) EPC

(43) Date of publication:
**05.02.2025   Bulletin 2025/06**

(21) Application number: **23779464.9**

(22) Date of filing: **10.03.2023**

(51) International Patent Classification (IPC):
*H01M 50/449* (2021.01)      *H01M 4/13* (2010.01)
*H01M 10/0566* (2010.01)    *H01M 50/403* (2021.01)
*H01M 50/414* (2021.01)    *H01M 50/42* (2021.01)
*H01M 50/443* (2021.01)    *H01M 50/451* (2021.01)

(52) Cooperative Patent Classification (CPC):
**H01M 4/13; H01M 10/0566; H01M 50/403;**
**H01M 50/414; H01M 50/42; H01M 50/443;**
**H01M 50/449; H01M 50/451;** Y02E 60/10

(86) International application number:
**PCT/JP2023/009443**

(87) International publication number:
**WO 2023/189441 (05.10.2023 Gazette 2023/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **31.03.2022  JP 2022061293**

(71) Applicant: **Zeon Corporation**
**Tokyo 100-8246 (JP)**

(72) Inventor: **MATSUNO, Hirohiko**
**Tokyo 100-8246 (JP)**

(74) Representative: **Maiwald GmbH**
**Elisenhof**
**Elisenstraße 3**
**80335 München (DE)**

(54) **SLURRY COMPOSITION FOR NONAQUEOUS SECONDARY CELL FUNCTIONAL LAYER AND METHOD FOR MANUFACTURING SAME, SEPARATOR FOR NONAQUEOUS SECONDARY CELL, AND NONAQUEOUS SECONDARY CELL**

(57)    A slurry composition for a non-aqueous secondary battery functional layer contains a particulate polymer having a glass-transition temperature within a specific range and a binder A including an alkali metal salt group and either or both of a hydroxy group and an acidic functional group.

**EP 4 503 305 A1**

**Description**

TECHNICAL FIELD

The present disclosure relates to a slurry composition for a non-aqueous secondary battery functional layer and method of producing the same, a separator for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications.

A secondary battery generally includes battery members such as electrodes (positive electrode and negative electrode) and a separator that isolates the positive electrode and the negative electrode from each other and prevents short-circuiting between the positive and negative electrodes. Moreover, a porous membrane layer for improving heat resistance and strength, an adhesive layer aimed at improving adhesiveness between battery members, or the like (hereinafter, such layers are also referred to generally as "functional layers") may be provided at the surface of an electrode and/or separator. Specifically, electrodes that further include a functional layer formed on an electrode substrate in which an electrode mixed material layer is provided on a current collector and separators that include a functional layer formed on a separator substrate have been used as battery members.

Various studies have been conducted in relation to compositions for forming functional layers with the aim of enhancing electrochemical characteristics of an obtained secondary battery. For example, Patent Literature (PTL) 1 and 2 propose compounding a polymeric compound that includes an acrylic repeating unit and also has an ONa group and an OLi group in a binder for a secondary battery. Moreover, PTL 3 and 4, for example, disclose compounding a particulate polymer having a glass-transition temperature that satisfies a specific condition as a binder component compounded in a composition for a functional layer.

CITATION LIST

Patent Literature

PTL 1: JP6888139B1
PTL 2: WO2021/172383A1
PTL 3: WO2013/151144A1
PTL 4: WO2020/175025A1

SUMMARY

(Technical Problem)

In production of a secondary battery, it is necessary for battery members that include a functional layer to have a low tendency to undergo blocking via the functional layer (hereinafter, referred to as "blocking resistance") even when such battery members including a functional layer are temporarily stored in a stacked state. Moreover, when an electrolyte solution is injected into a case housing battery members in an inner part thereof in production of a secondary battery, it is preferable that the electrolyte solution can permeate well into the battery members (i.e., that electrolyte solution injectability is excellent). Furthermore, it is also necessary for a secondary battery to have excellent cycle characteristics under high temperature. However, in the case of a functional layer that is formed using a composition for a functional layer according to a conventional technique such as described above, there is room for improvement in terms of increasing blocking resistance and realizing high levels of both electrolyte solution injectability and high-temperature cycle characteristics in a secondary battery including the functional layer.

Accordingly, one object of the present disclosure is to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Another object of the present disclosure is to provide a separator for a non-aqueous secondary battery that has excellent blocking resistance and that makes it possible to realize high levels of both electrolyte solution injectability and high-temperature cycle characteristics of an obtained secondary battery.

Another object of the present disclosure is to provide a non-aqueous secondary battery having excellent electrolyte solution injectability and high-temperature cycle characteristics.

Another object of the present disclosure is to provide a production method that enables efficient production of a presently disclosed slurry composition for a non-aqueous secondary battery functional layer.

(Solution to Problem)

The inventor conducted diligent studies with the aim of solving the problem set forth above and focused on properties of a particulate polymer and a binder differing from the particulate polymer that are used in formation of a functional layer. Moreover, the inventor made a new discovery that when the glass-transition temperature of the particulate polymer is within a specific range and when a polymer that includes an alkali metal salt group and either or both of a hydroxy group and an acidic functional group is compounded as the binder, it is possible to provide a functional layer having excellent blocking resistance and it is also possible to provide a non-aqueous secondary battery having excellent electrolyte solution injectability and high-temperature cycle characteristics. In this manner, the inventor completed the present disclosure.

Specifically, with the aim of advantageously solving the problem set forth above, [1] a presently disclosed slurry composition for a non-aqueous secondary battery functional layer comprises a particulate polymer and a binder A, wherein the particulate polymer has at least one glass-transition temperature of not lower than 30°C and not higher than 95°C, and the binder A includes an alkali metal salt group and either or both of a hydroxy group and an acidic functional group. Through a slurry composition for a functional layer that contains a particulate polymer having a glass-transition temperature in the temperature range set forth above and a binder A including an alkali metal salt group and either or both of a hydroxy group and an acidic functional group in this manner, it is possible to increase blocking resistance of an obtained functional layer and to realize high levels of both electrolyte solution injectability and high-temperature cycle characteristics of an obtained secondary battery.

Note that the "glass-transition temperature" of the particulate polymer is a value that is defined based on a differential scanning calorimetry (DSC) curve, and that in the case of a DSC curve having a plurality of peaks, the temperature at which a peak of largest displacement is displayed is taken to be the glass-transition temperature of that polymer. Also note that in a case in which a plurality of peaks of equal displacement are detected and in which those peaks have a maximum value among detected peaks, the average value thereof is taken to be the glass-transition temperature of the polymer.

Moreover, a functional group and an alkali metal salt group that are included in the binder A can be detected by a nuclear magnetic resonance (NMR) method such as $^1$H-NMR or $^{13}$C-NMR.

[2] In the slurry composition for a non-aqueous secondary battery functional layer according to the foregoing [1], the binder A is preferably a copolymer of vinyl alcohol and an alkali metal-neutralized ethylenically unsaturated carboxylic acid. When the binder A is a copolymer of a vinyl alcohol and an alkali metal-neutralized ethylenically unsaturated carboxylic acid, adhesive strength of an obtained functional layer in electrolyte solution can be even further increased, and high-temperature cycle characteristics of an obtained secondary battery can be even further improved.

[3] In the slurry composition for a non-aqueous secondary battery functional layer according to [1] or [2], a 3 mass% aqueous solution of the binder A preferably has a yellowness index of 14.0 or less. When a 3 mass% aqueous solution of the binder A has a yellowness index of 14.0 or less, adhesive strength of an obtained functional layer in electrolyte solution can be even further increased, and high-temperature cycle characteristics of an obtained secondary battery can be even further improved. Note that the yellowness index of the binder A can be evaluated according to a method described in the EXAMPLES section of the present specification.

[4] In the slurry composition for a non-aqueous secondary battery functional layer according to any one of the foregoing [1] to [3], the particulate polymer preferably has a volume-average particle diameter of not less than 0.25 $\mu$m and not more than 5 $\mu$m. When the volume-average particle diameter of the particulate polymer is within the range set forth above, adhesiveness of an obtained functional layer can be increased, and internal resistance of a secondary battery can be reduced. Note that the "volume-average particle diameter" of the particulate polymer refers to the particle diameter D50 at which, in a particle diameter distribution (by volume) measured using a laser diffraction particle size analyzer, cumulative volume calculated from a small diameter end of the distribution reaches 50%, and, more specifically, can be measured by a method described in the EXAMPLES section of the present specification.

[5] In the slurry composition for a non-aqueous secondary battery functional layer according to any one of the foregoing [1] to [4], the particulate polymer preferably has a core-shell structure. When the particulate polymer has a core-shell structure, adhesiveness of a functional layer can be increased, and high-temperature cycle characteristics of an obtained secondary battery can be even further enhanced.

[6] The slurry composition for a non-aqueous secondary battery functional layer according to any one of the foregoing [1] to [5] may further comprise heat-resistant particles. When the slurry composition contains heat-resistant particles, it is possible to suitably produce a functional layer that displays a function of increasing heat resistance of a battery member.

[7] Moreover, with the aim of advantageously solving the problem set forth above, a presently disclosed separator for a non-aqueous secondary battery comprises: a separator substrate; and a functional layer formed on at least part of at least one surface of the separator substrate, wherein the functional layer is a dried product of the slurry composition for a non-aqueous secondary battery functional layer according to any one of the foregoing [1] to [6]. A separator that includes a separator substrate and a functional layer that is a dried product of any one of the slurry compositions set forth above in this manner has excellent blocking resistance and makes it possible to realize high levels of both electrolyte solution injectability and high-temperature cycle characteristics of an obtained secondary battery.

[8] Furthermore, with the aim of advantageously solving the problem set forth above, a presently disclosed non-aqueous secondary battery comprises a positive electrode, a negative electrode, a separator, and an electrolyte solution, wherein the separator is the separator for a non-aqueous secondary battery according to the foregoing [7]. A secondary battery that includes the separator set forth above in this manner can realize high levels of both electrolyte solution injectability and high-temperature cycle characteristics.

[9] Also, with the aim of advantageously solving the problem set forth above, a presently disclosed method of producing a slurry composition for a non-aqueous secondary battery functional layer is a method of producing the slurry composition for a non-aqueous secondary battery functional layer according to any one of the foregoing [1] to [6] comprising polymerizing a monomer composition containing either or both of a vinyl ester monomer and an ethylenically unsaturated carboxylic acid ester monomer to obtain a polymer and further saponifying the polymer in the presence of an alkali metal compound and a reductant to obtain a saponified product of the polymer as the binder A. According to this production method, it is possible to efficiently produce the presently disclosed slurry composition for a functional layer set forth above.

(Advantageous Effect)

According to the present disclosure, it is possible to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Moreover, according to the present disclosure, it is possible to provide a separator for a non-aqueous secondary battery that has excellent blocking resistance and that makes it possible to realize high levels of both electrolyte solution injectability and high-temperature cycle characteristics of an obtained secondary battery.

Furthermore, according to the present disclosure, it is possible to provide a non-aqueous secondary battery having excellent electrolyte solution injectability and high-temperature cycle characteristics.

Also, according to the present disclosure, it is possible to efficiently produce the presently disclosed slurry composition for a non-aqueous secondary battery functional layer.

DETAILED DESCRIPTION

The following provides a detailed description of embodiments of the present disclosure.

The presently disclosed slurry composition for a non-aqueous secondary battery functional layer may be used as a material in production of a functional layer included in a battery member such as a separator or an electrode. Moreover, the presently disclosed separator for a non-aqueous secondary battery includes a functional layer that is formed of a dried product of the presently disclosed slurry composition for a non-aqueous secondary battery functional layer. Furthermore, the presently disclosed non-aqueous secondary battery includes the presently disclosed separator for a non-aqueous secondary battery. Also, the presently disclosed method of producing a slurry composition for a non-aqueous secondary battery functional layer enables efficient production of the presently disclosed slurry composition for a non-aqueous secondary battery functional layer. Note that the functional layer may be an adhesive layer that displays adhesive capability for adhering a battery member including the functional layer and another battery member that is an adherend, or may be a heat-resistant adhesive layer that contains heat-resistant particles and that can also display a function of heat resistance in addition to adhesive capability.

(Slurry composition for non-aqueous secondary battery functional layer)

The presently disclosed slurry composition for a non-aqueous secondary battery functional layer contains a particulate polymer and a binder A and can optionally further contain a solvent and other components.

The particulate polymer that is contained in the presently disclosed slurry composition has at least one glass-transition temperature in a temperature range of not lower than 30°C and not higher than 95°C. Moreover, the binder A that is contained in the presently disclosed slurry composition includes an alkali metal salt group and either or both of a hydroxy group and an acidic functional group. Through the slurry composition containing both the particulate polymer and the binder A that satisfy the specific attributes set forth above, it is possible to provide a functional layer having excellent blocking resistance, and it is also possible to provide a secondary battery in which high levels of both electrolyte solution injectability and high-temperature cycle characteristics can be realized.

<Particulate polymer>

The particulate polymer has at least one glass-transition temperature of not lower than 30°C and not higher than 95°C. It is also preferable that the particulate polymer does not have a glass-transition temperature outside of the range set forth above. Note that the particulate polymer is preferably water-insoluble. When a polymer is said to be "water-insoluble" in the present disclosure, this means that when 0.5 g of the polymer is dissolved in 100 g of water at a temperature of 25°C, insoluble content is 90 mass% or more.

«Glass-transition temperature»

The temperature range in which the particulate polymer has at least one glass-transition temperature is required to be not lower than 30°C and not higher than 95°C, is preferably 75°C or lower, and more preferably 70°C or lower, and is preferably 35°C or higher, and more preferably 45°C or higher. When the temperature range in which the particulate polymer has at least one glass-transition temperature is not lower than any of the lower limits set forth above, blocking resistance of an obtained functional layer can be increased, and internal resistance of an obtained secondary battery can be reduced. When the temperature range in which the particulate polymer has at least one glass-transition temperature is not higher than any of the upper limits set forth above, deformability of the particulate polymer during pressing or the like in production of a secondary battery increases, adhesiveness of a functional layer after immersion in electrolyte solution can be further improved, and high-temperature cycle characteristics of an obtained secondary battery can be enhanced. Note that the glass-transition temperature of the particulate polymer can be adjusted by altering the types and proportions of monomers used to produce the particulate polymer, for example.

In a case in which the particulate polymer is a combination of a plurality of types of polymers such as a subsequently described polymer having a core-shell structure, the temperature at which a peak of large displacement is displayed is taken to be the glass-transition temperature of that polymer as described further below in the EXAMPLES section.

«Core-shell structure»

The particulate polymer preferably has a core-shell structure. In the case of a particulate polymer having a core-shell structure, the particulate polymer has a core-shell structure that includes a core portion and a shell portion covering an outer surface of the core portion. By using a particulate polymer having a core-shell structure, it is possible to increase adhesiveness of a functional layer after immersion in electrolyte solution and also to even further enhance high-temperature cycle characteristics of an obtained secondary battery. The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a particulate polymer that includes a shell portion having fine pores that pass between an outer surface of the shell portion (i.e., a circumferential surface of the particulate polymer) and an outer surface of a core portion, for example, also corresponds to a particulate polymer in which a shell portion partially covers an outer surface of a core portion.

Note that the particulate polymer may include any constituent element other than the core portion and the shell portion described above so long as the expected effects are not significantly lost as a result. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

«Volume-average particle diameter»

The volume-average particle diameter of the particulate polymer is preferably 0.25 $\mu$m or more, more preferably 0.30 $\mu$m or more, and even more preferably 0.40 $\mu$m or more, and is preferably 5.0 $\mu$m or less, more preferably 4.0 $\mu$m or less, and even more preferably 3.0 $\mu$m or less. When the volume-average particle diameter of the particulate polymer is not less than any of the lower limits set forth above, internal resistance of an obtained secondary battery can be reduced, presumably because it is easy to ensure that fine gaps are present in a functional layer. On the other hand, when the volume-average particle diameter of the particulate polymer is not more than any of the upper limits set forth above, adhesiveness of a functional layer after immersion in electrolyte solution can be further improved.

Note that the volume-average particle diameter of the particulate polymer can be adjusted by altering the types and proportions of monomers used to produce the particulate polymer and/or the polymerization conditions of the particulate polymer (for example, the used amount of emulsifier), for example.

«Chemical composition»

No specific limitations are placed on the chemical composition of the particulate polymer so long as the particulate polymer has at least one glass-transition temperature of not lower than 30°C and not higher than 95°C. For example, the particulate polymer may be a homopolymer formed of repeating units of a single monomer or may be a copolymer that includes copolymerization units of a plurality of types of monomers. The homopolymer may be polyvinyl acetate, polyvinylidene fluoride, polymethyl methacrylate, or the like without any specific limitations. In particular, polyvinyl acetate is preferable in a case in which the particulate polymer is a homopolymer. Moreover, the copolymer may be a copolymer having a chemical composition illustrated by example below, for example. Furthermore, in a case in which the particulate polymer is the aforementioned polymer having a core-shell structure, the chemical composition of a polymer forming the core portion can be a chemical composition in accordance with the following description.

Although no specific limitations are placed on repeating units included in the particulate polymer, an aromatic monovinyl monomer unit and a cross-linkable monomer unit are preferable. Note that the particulate polymer may include just one type of monomer unit (repeating unit) or may include a plurality of types of monomer units (repeating units).

-Aromatic monovinyl monomer unit-

Examples of aromatic monovinyl monomers that can form an aromatic monovinyl monomer unit of the particulate polymer include styrene, styrene sulfonic acid and salts thereof (for example, sodium styrenesulfonate), $\alpha$-methylstyrene, vinyltoluene, and 4-(tert-butoxy)styrene. One of these aromatic monovinyl monomers may be used individually, or two or more of these aromatic monovinyl monomers may be used in combination. Of these aromatic monovinyl monomers, styrene is preferable.

The proportion constituted by aromatic monovinyl monomer units included in the particulate polymer when all repeating units are taken to be 100 mass% is preferably 20 mass% or more, more preferably 30 mass% or more, and more preferably 40 mass% or more, and is preferably 85 mass% or less, and more preferably 75 mass% or less. When the proportion constituted by aromatic monovinyl monomer units in the polymer of the core portion is not less than any of the lower limits set forth above, the glass-transition temperature of the polymer of the core portion increases, and blocking resistance of a battery member including a functional layer can be improved. On the other hand, when the proportion constituted by aromatic monovinyl monomer units in the polymer of the core portion is not more than any of the upper limits set forth above, adhesiveness of a functional layer after immersion in electrolyte solution can be further improved because deformability of the particulate polymer during pressing or the like in production of a secondary battery is sufficiently ensured.

-Cross-linkable monomer unit-

Examples of cross-linkable monomers that can form a cross-linkable monomer unit of the particulate polymer include monomers that can form a cross-linked structure through polymerization without any specific limitations. Examples of cross-linkable monomers that can be used typically include monomers that are thermally cross-linkable. More specifically, a cross-linkable monomer that includes a thermally cross-linkable group and one olefinic double bond per molecule or a cross-linkable monomer that includes two or more olefinic double bonds per molecule may be used.

Examples of thermally cross-linkable groups include an epoxy group, an N-methylolamide group, an oxetanyl group, an oxazoline group, and combinations thereof. Of these thermally cross-linkable groups, an epoxy group is more preferable in terms of ease of cross-linking and cross-link density adjustment.

Examples of cross-linkable monomers that include an epoxy group as a thermally cross-linkable group and an olefinic double bond include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid.

Examples of cross-linkable monomers that include an N-methylolamide group as a thermally cross-linkable group and an olefinic double bond include methylol group-containing (meth)acrylamides such as N-methylol (meth) acrylamide. Note that in the present specification, "(meth)acryl" indicates "acryl" or "methacryl".

Examples of cross-linkable monomers that include an oxetanyl group as a thermally cross-linkable group and an olefinic double bond include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane. Note that in the present specification, "(meth)acryloyl" indicates "acryloyl" and/or "methacryloyl".

Examples of cross-linkable monomers that include an oxazoline group as a thermally cross-linkable group and an olefinic double bond include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of cross-linkable monomers that include two or more olefinic double bonds per molecule include allyl (meth)acrylate, ethylene glycol di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxyethane, trimethylolpropane diallyl ether, allyl or vinyl ethers of polyfunctional alcohols other than those previously mentioned, triallylamine, methylenebisacrylamide, and divinylbenzene.

Note that in the present disclosure, "(meth)acrylate" indicates "acrylate" and/or "methacrylate".

One cross-linkable monomer may be used individually, or a plurality of cross-linkable monomers may be used in combination. Of these cross-linkable monomers, cross-linkable monomers that include two or more olefinic double bonds per molecule are preferable, ethylene glycol dimethacrylate and allyl methacrylate are more preferable, and ethylene glycol dimethacrylate is even more preferable.

The proportion constituted by cross-linkable monomer units included in the particulate polymer when all repeating units are taken to be 100 mass% is preferably 0.05 mass% or more, and more preferably 0.1 mass% or more, and is preferably 15.0 mass% or less, and more preferably 13.0 mass% or less. When the proportion constituted by cross-linkable monomer units in the particulate polymer is within any of the ranges set forth above, adhesiveness of a functional layer after immersion in electrolyte solution and rate characteristics and high-temperature cycle characteristics of a secondary battery can be improved.

-Other monomer units-

Although no specific limitations are placed on monomer units (other monomer units) that the particulate polymer can include besides an aromatic monovinyl monomer unit and a cross-linkable monomer unit, examples thereof include an acidic group-containing monomer unit, a (meth)acrylic acid ester monomer unit, and a nitrile group-containing monomer unit.

-Acidic group-containing monomer unit-

Examples of acidic group-containing monomers that can form an acidic group-containing monomer unit of the particulate polymer include carboxy group-containing monomers, sulfo group-containing monomers, and phosphate group-containing monomers. One of these acidic group-containing monomers may be used individually, or two or more of these acidic group-containing monomers may be used in combination. Note that an acid group of an acidic group-containing monomer unit may form a salt with an alkali metal, ammonia, or the like.

Examples of carboxy group-containing monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of these ethylenically unsaturated dicarboxylic acids and acid anhydrides.

Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, $\alpha$-acetoxyacrylic acid, $\beta$-trans-aryloxyacrylic acid, $\alpha$-chloro- $\beta$-E-methoxyacrylic acid, and $\beta$-diaminoacrylic acid.

Examples of ethylenically unsaturated dicarboxylic acids include maleic acid, fumaric acid, itaconic acid, and mesaconic acid. Examples of acid anhydrides of ethylenically unsaturated dicarboxylic acids include maleic anhydride, acrylic anhydride, methylmaleic anhydride, and dimethylmaleic anhydride. Examples of derivatives of ethylenically unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2- hydroxypropane sulfonic acid.

Note that in the present disclosure, "(meth)allyl" indicates "allyl" and/or "methallyl", and "(meth)acryl" indicates "acryl" and/or "methacryl".

Examples of phosphate group-containing monomers include 2- (meth)acryloyloxy ethyl phosphate, methyl-2-(meth)acryloyloxy ethyl phosphate, and ethyl-(meth)acryloyloxyethyl phosphate.

Of these examples, carboxy group-containing monomers are preferable, acrylic acid, methacrylic acid, and itaconic acid are more preferable, and methacrylic acid is even more preferable as an acidic group-containing monomer.

The proportion constituted by acidic group-containing monomer units that can optionally be included in the particulate polymer when all repeating units are taken to be 100 mass% may be 1.0 mass% or more, or may be 1.5 mass% or more, and is preferably 7.0 mass% or less, more preferably 6.0 mass% or less, and even more preferably 5.0 mass% or less. When the proportion constituted by acidic group-containing monomer units in the particulate polymer is not less than any of the lower limits set forth above, adhesiveness of an obtained functional layer in electrolyte solution can be increased. On the other hand, when the proportion constituted by acidic group- containing monomer units in the particulate polymer is not more than any of the upper limits set forth above, high-temperature cycle characteristics of a secondary battery can be further improved.

-(Meth)acrylic acid ester monomer unit-

Examples of (meth)acrylic acid ester monomers that can form a (meth)acrylic acid ester monomer unit of the particulate polymer include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n- tetradecyl methacrylate, stearyl methacrylate, and glycidyl methacrylate. One of these (meth)acrylic acid ester monomers may be used individually, or a plurality of these (meth) acrylic acid ester monomers may be used in combination. Of these (meth)acrylic acid ester monomers, 2-ethylhexyl acrylate, n-butyl acrylate, and ethyl acrylate are preferable, and 2-ethylhexyl acrylate is more preferable.

The proportion constituted by (meth)acrylic acid ester monomer units that are optionally included in the particulate polymer when all repeating units are taken to be 100 mass% is preferably 20 mass% or more, and is preferably 50 mass% or less, and more preferably 40 mass% or less. When the proportion constituted by (meth)acrylic acid ester monomer units in the particulate polymer is within any of the ranges set forth above, adhesiveness of a functional layer after immersion in electrolyte solution and rate characteristics and high-temperature cycle characteristics of a secondary battery can be enhanced.

-Nitrile group-containing monomer unit-

Examples of nitrile-group containing monomers that can form a nitrile group-containing monomer unit of the particulate polymer include $\alpha,\beta$- ethylenically unsaturated nitrile monomers. Specifically, any $\alpha,\beta$-ethylenically unsaturated compound that has a nitrile group can be used as an $\alpha,\beta$- ethylenically unsaturated nitrile monomer without any specific limitations. Examples include acrylonitrile; $\alpha$-halogenoacrylonitriles such as $\alpha$- chloroacrylonitrile and $\alpha$-bromoacrylonitrile; and $\alpha$-alkylacrylonitriles such as methacrylonitrile and $\alpha$-ethylacrylonitrile. One of these nitrile-group containing monomers may be used individually, or a plurality of these nitrile- group containing monomers may be used in combination. Of these nitrile-group containing monomers, acrylonitrile and methacrylonitrile are preferable, and acrylonitrile is more preferable.

The proportion constituted by nitrile group-containing monomer units that are optionally included in the particulate polymer when all repeating units are taken to be 100 mass% may be 1 mass% or more, or may be 5 mass% or more, and is preferably 20 mass% or less, and more preferably 15 mass% or less. When the proportion constituted by nitrile-group containing monomer units in the particulate polymer is within any of the ranges set forth above, adhesiveness of a functional layer after immersion in electrolyte solution and rate characteristics and high-temperature cycle characteristics of a secondary battery can be enhanced.

As previously mentioned, in a case in which the particulate polymer is a core-shell polymer having a core-shell structure, a polymer forming the core portion is preferably as described above, and a polymer forming the shell portion is preferably as described below.

[Shell portion]

In a case in which the particulate polymer is a core-shell polymer having a core-shell structure, no specific limitations are placed on repeating units included in a polymer that forms the shell portion, though an aromatic monovinyl monomer unit and an acidic group-containing monomer unit are preferable. Note that the polymer of the shell portion may include just one type of monomer unit (repeating unit) or may include a plurality of types of monomer units (repeating units).

-Aromatic monovinyl monomer unit-

Examples of aromatic monovinyl monomers that can form an aromatic monovinyl monomer unit of the polymer of the shell portion include the same aromatic monovinyl monomers as previously described. One of these aromatic monovinyl monomers may be used individually, or a plurality of these aromatic monovinyl monomers may be used in combination. Of these aromatic monovinyl monomers, styrene is preferable.

The proportion constituted by aromatic monovinyl monomer units included in the polymer of the shell portion when all repeating units included in the particulate polymer (i.e., the total of the polymer of the core portion and the polymer of the shell portion) are taken to be 100 mass% is preferably 10 mass% or more, and more preferably 20 mass% or more. When the proportion constituted by aromatic monovinyl monomer units of the shell portion in the particulate polymer is 10 mass% or more, the glass-transition temperature of the polymer of the shell portion in the particulate polymer having a core-shell structure increases, and blocking resistance of a battery member including a functional layer can be improved. Note that the upper limit for the proportion constituted by aromatic monovinyl monomer units of the shell portion in the particulate polymer is preferably 40 mass% or less, and more preferably 30 mass% or less.

-Acidic group-containing monomer unit-

Examples of acidic group-containing monomers that can form an acidic group-containing monomer unit of the polymer of the shell portion include the same acidic group-containing monomers as previously described in the "Core portion" section. One of these acidic group-containing monomers may be used individually, or a plurality of these acidic group-containing monomers may be used in combination. Of these acidic group-containing monomers, carboxy group-containing monomers are preferable, acrylic acid, methacrylic acid, and itaconic acid are more preferable, and methacrylic acid is even more preferable.

The proportion constituted by acidic group-containing monomer units included in the polymer of the shell portion when all repeating units included in the particulate polymer (i.e., the total of the polymer of the core portion and the polymer of the shell portion) are taken to be 100 mass% is preferably 0.01 mass% or more, and more preferably 0.1 mass% or more, and is preferably 1.0 mass% or less, and more preferably 0.6 mass% or less. When the proportion constituted by acidic group-containing monomer units of the shell portion in the particulate polymer is not less than any of the lower limits set forth above, adhesiveness of a functional layer in electrolyte solution can be increased. On the other hand, when the proportion constituted by acidic group-containing monomer units of the shell portion in the particulate polymer is not more than any of the upper limits set forth above, high-temperature cycle characteristics of a secondary battery can be even further improved.

-Other monomer units-

No specific limitations are placed on monomer units (other monomer units) that the polymer forming the shell portion can include besides an aromatic monovinyl monomer unit and an acidic group-containing monomer unit, and examples thereof include a cross-linkable monomer unit, a (meth)acrylic acid ester monomer unit, and a nitrile group-containing monomer unit such as previously described. Of these other monomer units, it is preferable that the polymer of the shell portion includes a nitrile group- containing monomer unit.

Examples of nitrile group-containing monomers that can form a nitrile group-containing monomer unit of the polymer of the shell portion include the same nitrile group-containing monomers as previously described. One of these nitrile-group containing monomers may be used individually, or a plurality of these nitrile-group containing monomers may be used in combination. Of these nitrile group-containing monomers, acrylonitrile and methacrylonitrile are preferable, and acrylonitrile is more preferable.

The proportion constituted by nitrile group-containing monomer units included in the polymer of the shell portion when all repeating units included in the particulate polymer (i.e., the total of the polymer of the core portion and the polymer of the shell portion) are taken to be 100 mass% is preferably 0.5 mass% or more, and more preferably 1.0 mass% or more, and is preferably 10.0 mass% or less, and more preferably 5.0 mass% or less. When the proportion constituted by nitrile-group containing monomer units of the shell portion in the particulate polymer is within any of the ranges set forth above, adhesiveness of a functional layer after immersion in electrolyte solution and rate characteristics and high-temperature cycle characteristics of a secondary battery can be further improved.

<<Production method>>

No specific limitations are placed on the method by which the particulate polymer is produced. The particulate polymer can be produced by a method that is in accordance with an established method such as emulsion polymerization. For example, in a case in which the particulate polymer is a core-shell polymer having a core-shell structure, the particulate polymer can be produced by stepwise polymerization in which the ratio of monomers for the polymer of the core portion and monomers for the polymer of the shell portion is changed over time, for example. Specifically, the particulate polymer having a core-shell structure can be produced by continuous multistage emulsion polymerization or multistage suspension polymerization in which a polymer of a preceding stage is sequentially covered by a polymer of a subsequent stage (for example, refer to WO2020/175025A1).

<Binder A>

The presently disclosed slurry composition contains a binder A that includes an alkali metal salt group and either or both of a hydroxy group and an acidic functional group. The binder A may be a saponified product. The binder A is a component that can function as a binder in a heat-resistant layer formed using the slurry composition, that can impart binding capacity to a functional layer formed using the slurry composition, and that can hold components other than the binder A, such as heat-resistant particles, that are contained in the functional layer so that the components are not shed from the functional layer.

So long as the binder A includes an alkali metal salt group and either or both of a hydroxy group and an acidic functional group, the binder A may optionally include functional groups other than these groups without any specific limitations.

<<Acidic functional group>>

The acidic functional group that can be included in the binder A may be an ethylenically unsaturated carboxy group, a carboxy group, a sulfo group, a phosphate group, or the like. In particular, the acidic functional group is preferably an ethylenically unsaturated carboxy group such as an acrylic acid group, a methacrylic acid group, or a crotonic acid group from a viewpoint of increasing adhesiveness of an obtained functional layer.

«Alkali metal salt group»

The alkali metal that is a constituent of the alkali metal salt group may be lithium, sodium, potassium, rubidium, cesium, or francium, of which, lithium and sodium are preferable. The alkali metal salt group in the binder A can be derived from an alkali metal compound. The alkali metal compound is not specifically limited and may be a hydroxide of any of the aforementioned alkali metals.

«Polymer chemical composition»

The polymer chemical composition of the binder A is not specifically limited so long as it includes the above-described functional group and alkali metal salt group. The binder A can include any monomer unit as a repeating unit. Note that the phrase "includes a monomer unit" as used in the present specification means that "a repeating unit derived from that monomer is included in a polymer obtained using the monomer".

For example, a vinyl ester monomer may be used as a monomer that can be used to introduce a hydroxy group into the binder A. A hydroxy group can be introduced into the binder A through saponification of a vinyl ester monomer unit formed using the vinyl ester monomer. Examples of vinyl ester monomers include vinyl acetate, vinyl pivalate, vinyl formate, vinyl propionate, vinyl butyrate, vinyl n-caproate, vinyl isocaproate, vinyl octanoate, vinyl laurate, vinyl palmitate, vinyl stearate, vinyl trimethylacetate, vinyl chloroacetate, vinyl trichloroacetate, vinyl trifluoroacetate, and vinyl benzoate. One of these vinyl ester monomers can be used individually, or two or more of these vinyl ester monomers can be used in combination. Of these examples, vinyl acetate is preferably used as a vinyl ester monomer.

The proportion constituted by monomer units derived from the vinyl ester monomer in the binder A when all repeating units forming the binder A are taken to be 100 mass% is preferably 5 mass% or more, more preferably 20 mass% or more, and even more preferably 50 mass% or more, and is preferably 95 mass% or less, and more preferably 90 mass% or less. When the proportion constituted by monomer units derived from the vinyl ester monomer is within any of the ranges set forth above, adhesiveness of an obtained functional layer can be even further increased, and high-temperature cycle characteristics and electrolyte solution injectability of an obtained secondary battery can be even further enhanced.

Moreover, an ethylenically unsaturated carboxylic acid ester monomer may be used a monomer that can be used to introduce an acidic functional group into the binder A. The ethylenically unsaturated carboxylic acid ester monomer may be a (meth)acrylic acid ester monomer, a crotonic acid ester monomer, or the like. In particular, examples of (meth)acrylic acid ester monomers that can suitably be used include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and glycidyl methacrylate. One of these (meth)acrylic acid ester monomers can be used individually, or two or more of these (meth)acrylic acid ester monomers can be used in combination. Of these (meth)acrylic acid ester monomers, methyl acrylate and methyl methacrylate are preferable.

The proportion constituted by monomer units derived from the ethylenically unsaturated carboxylic acid ester monomer in the binder A when all repeating units forming the binder A are taken to be 100 mass% is preferably 5 mass% or more, and more preferably 10 mass% or more, and is preferably 95 mass% or less, more preferably 80 mass% or less, and even more preferably 50 mass% or less. When the proportion constituted by monomer units derived from the ethylenically unsaturated carboxylic acid ester monomer is within any of the ranges set forth above, adhesiveness of an obtained functional layer can be even further increased, and high-temperature cycle characteristics and electrolyte solution injectability of an obtained secondary battery can be even further enhanced.

The binder A is preferably a copolymer of vinyl alcohol and an alkali metal-neutralized ethylenically unsaturated carboxylic acid. When the binder A is a copolymer of vinyl alcohol and an alkali metal-neutralized ethylenically unsaturated carboxylic acid, adhesive strength of an obtained functional layer in electrolyte solution can be even further increased, and high-temperature cycle characteristics of an obtained secondary battery can be even further improved.

The copolymer of vinyl alcohol and an alkali metal-neutralized ethylenically unsaturated carboxylic acid serving as the binder A can be produced by performing saponification of a copolymer of a vinyl ester and an ethylenically unsaturated carboxylic acid ester monomer such as described above in the presence of an alkali metal compound such as an alkali metal hydroxide and a reductant. In more detail, saponification of the vinyl ester enables introduction of a vinyl alcohol unit, which is a unit including a hydroxy group, into the copolymer. Moreover, an alkali metal salt of an ethylenically unsaturated carboxy group can be formed through formation of a salt by an alkali metal and an ethylenically unsaturated carboxy group of an ethylenically unsaturated carboxylic acid ester unit included in the copolymer. In this manner, it is possible to efficiently produce a binder A that is a copolymer of vinyl alcohol and an alkali metal-neutralized ethylenically unsaturated carboxylic acid.

<<Other repeating units>>

The binder A may include other repeating units besides the repeating units described above. No specific limitations are placed on other repeating units, and examples thereof include monomer units derived from known monomers such as a cross-linkable monomer unit previously described in the "Particulate polymer" section. Note that the binder A may include one type of other repeating unit or may include two or more types of other repeating units in a freely selected ratio.

Moreover, the proportional content of other repeating units when all repeating units (all monomer units) included in the binder A are taken to be 100 mass% is preferably 10 mass% or less, more preferably 5 mass% or less, even more preferably 1 mass% or less, and particularly preferably 0 mass%.

<Yellowness index of binder A>

The yellowness index of the binder A is preferably 14.0 or less, more preferably 11.0 or less, and even more preferably 10.0 or less. Note that no specific limitations are placed on the lower limit for the yellowness index of the binder A and that the yellowness index of the binder A can be 0, for example. When the yellowness index of the binder A is not more than any of the upper limits set forth above, adhesive strength of an obtained functional layer in electrolyte solution can be even further increased, and high-temperature cycle characteristics of an obtained secondary battery can be even further improved. Note that the yellowness index of the polymer can be controlled through adjustment of production conditions in production of the binder. Specifically, an increase of the yellowness index can be suppressed by adding a reductant or the like in production. Moreover, the yellowness index can be altered according to the types of reductant and alkali metal compound that are used, for example.

<Amount of binder A>

The amount of the binder A in the slurry composition is preferably 0.1 parts by mass or more, more preferably 0.5 parts by mass or more, and even more preferably 1.5 parts by mass or more per 100 parts by mass of the particulate polymer, and is preferably 20 parts by mass or less, more preferably 10 parts by mass or less, and even more preferably 5.0 parts by mass or less per 100 parts by mass of the particulate polymer. When the amount of the binder A is not less than any of the lower limits set forth above, electrolyte solution injectability and high-temperature cycle characteristics of an obtained secondary battery can be even further enhanced. Moreover, when the amount of the binder A is not more than any of the upper limits set forth above, blocking resistance of an obtained functional layer can be even further increased.

<Binder B>

In addition to the particulate polymer and binder A described above, the presently disclosed slurry composition preferably further contains a binder B that is a different polymer from these polymers. Any polymer can be used as the binder B without any specific limitations so long as it can display adhesive capability for holding components such as the particulate polymer in a functional layer and/or adhesive capability between the functional layer and an adherend. In particular, a polymer having a glass-transition temperature of lower than 20°C is preferable as the binder B. Note that the binder B is preferably water-insoluble.

«Glass-transition temperature»

The glass-transition temperature of the binder B is preferably lower than 20°C, preferably lower than 15°C, and more preferably 12°C or lower, and is preferably -40°C or higher, more preferably -20°C or higher, and even more preferably -10°C or higher. By using a slurry composition that in addition to the previously described particulate polymer, also contains a binder B having a glass-transition temperature that is lower than any of the upper limits set forth above, it is possible to improve adhesiveness of a functional layer after immersion in electrolyte solution while also even further enhancing rate characteristics of a secondary battery. On the other hand, when the glass-transition temperature of the binder B is not lower than any of the lower limits set forth above, blocking resistance of an obtained functional layer can be improved.

Note that the glass-transition temperature of the binder B can be adjusted by altering the types and proportions of monomers used to produce the binder B, for example.

«Chemical composition»

No specific limitations are placed on the chemical composition of the binder B. For example, the binder B may be an aromatic vinyl polymer in which the proportional content of aromatic monovinyl monomer units is 50 mass% or more of all repeating units or may be an acrylic polymer in which the proportional content of (meth)acrylic acid ester monomer units is 50 mass% or more of all repeating units. Examples of other monomer units besides an aromatic monovinyl monomer unit that can be included in the aromatic vinyl polymer include, but are not specifically limited to, an aliphatic conjugated diene monomer unit derived from 1,3-butadiene or the like, a hydroxy group-containing monomer unit derived from 2-hydroxyethyl acrylate or the like, and an acidic group-containing monomer unit derived from itaconic acid or the like. Moreover, examples of other monomer units besides a (meth)acrylic acid ester monomer unit that can be included in the acrylic polymer include, but are not specifically limited to, an acidic group-containing monomer unit derived from (meth)acrylic acid or the like and a nitrile group-containing monomer unit derived from acrylonitrile or the like.

The method of polymerization of the binder B may be in accordance with an established method without any specific limitations. Moreover, a commercially available binder can, of course, be used as the binder B.

<<Amount>>

The amount of the binder B that is compounded in the presently disclosed slurry composition is not specifically limited but is preferably 1 part by mass or more, and more preferably 2 parts by mass or more per 100 parts by mass of the particulate polymer, and is preferably 50 parts by mass or less, and more preferably 40 parts by mass or less per 100 parts by mass of the particulate polymer. Adhesiveness of a functional layer after immersion in electrolyte solution can be further improved when the amount of the binder B is not less than any of the lower limits set forth above per 100 parts by mass of the particulate polymer, whereas blocking resistance of a battery member including a functional layer can be ensured when the amount of the binder B is not more than any of the upper limits set forth above per 100 parts by mass of the particulate polymer.

<Solvent>

A known solvent that can be used as a dispersion medium of at least the previously described particulate polymer can be used as a solvent that is contained in the presently disclosed slurry composition. Of such solvents, water is preferable as the solvent. Note that at least a portion of the solvent of the slurry composition can be a polymerization solvent that was used in production of the particulate polymer or the like, but is not specifically limited thereto.

<Other components>

The presently disclosed slurry composition may contain any other components besides the components described above. Commonly known components can be used as these other components without any specific limitations so long as they do not affect battery reactions. One of such other components may be used individually, or two or more of such other components may be used in combination.

Examples of other components include heat-resistant particles, wetting agents (polyethylene oxide, polypropylene oxide, etc.), and water-soluble polymers (carboxymethyl cellulose, salts of carboxymethyl cellulose, polyvinyl alcohol, etc.).

Any known heat-resistant particles that are used in non-aqueous secondary batteries can be used without any specific limitations as heat-resistant particles that are compounded in the slurry composition.

Specifically, although both inorganic fine particles and organic fine particles other than the particulate polymer and binder B described above can be used as the heat-resistant particles, inorganic fine particles are normally used. The material of the heat-resistant particles is preferably an electrochemically stable material that is present stably in the environment of use of a non-aqueous secondary battery. Examples of materials of the heat-resistant particles that are preferable from such a viewpoint include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. These particles may be subjected to element substitution, surface treatment, solid solution treatment, and/or the like as necessary.

In a case in which organic fine particles are used as the heat-resistant particles, the glass-transition temperature and/or melting point of the organic fine particles is normally higher than 150°C, preferably 180°C or higher, and more preferably 200°C or higher.

Note that one of the types of heat-resistant particles described above may be used individually, or two or more of the types of heat-resistant particles described above may be used in combination.

The amount of the heat-resistant particles in the slurry composition is not specifically limited but is preferably not less than 200 parts by mass and not more than 1,500 parts by mass per 100 parts by mass of the particulate polymer.

(Method of producing slurry composition for non-aqueous secondary battery functional layer)

The presently disclosed method of producing slurry composition for a non-aqueous secondary battery functional layer is a production method including a step (binder production step) of polymerizing a monomer composition containing either or both of a vinyl ester monomer and an ethylenically unsaturated carboxylic acid ester monomer to obtain a polymer and further saponifying the polymer in the presence of an alkali metal compound and a reductant to obtain a saponified product of the polymer as a binder A. The presently disclosed production method set forth above enables efficient production of the presently disclosed slurry composition for a non-aqueous secondary battery functional layer. Moreover, the presently disclosed production method can include a mixing step of mixing the binder A produced in the binder production step with other constituent components.

<Binder production step>

Production of the polymer in the binder production step can be performed in accordance with a commonly known method such as suspension polymerization without any specific limitations (for example, refer to WO2017/168947A1).

Moreover, in the binder production step, a polymer that includes a repeating unit derived from either or both of a vinyl ester monomer and an ethylenically unsaturated carboxylic acid ester monomer is saponified in the presence of an alkali metal compound and a reductant to obtain a saponified product of the polymer as a binder A. A hydroxide of an alkali metal such as previously described can suitably be used as the alkali metal compound. Moreover, saponification of the polymer can also be performed in accordance with a commonly known method (for example, refer to WO2017/168947A1). Furthermore, a reductant such as ascorbic acid, sodium thiosulfate, or hydrazine, for example, may be used as the reductant. In particular, ascorbic acid and sodium thiosulfate are preferable as the reductant because they result in few impurities and the expression of good binding capacity by the binder.

<Mixing step>

The presently disclosed production method can include a mixing step of, after the binder production step described above, mixing a particulate polymer, the binder A, and a solvent with a binder B and/or other components that are used as necessary. Note that the particulate polymer, solvent, and other optional components can suitably be any of those that were previously described. Although no specific limitations are placed on the mixing method in the mixing step, the mixing is normally carried out using a disperser as a mixing device in order to efficiently disperse the components. The disperser is preferably a device that can uniformly disperse and mix the above-described components. Examples of such devices include a ball mill, a sand mill, a pigment disperser, a grinding machine, an ultrasonic disperser, a homogenizer, and a planetary mixer. A high-level dispersing device such as a bead mill, a roll mill, or a FILMIX may be used from a viewpoint of being capable of imparting a high level of dispersing shear.

(Functional layer)

The presently disclosed slurry composition for a non-aqueous secondary battery functional layer set forth above can be used to form a functional layer on a suitable substrate. Specifically, a functional layer can be formed by drying the slurry composition on a suitable substrate. In other words, the functional layer is formed of a dried product of the slurry composition set forth above, normally contains the previously described particulate polymer and binder A, and optionally contains the previously described binder B and/or other components. Note that in a case in which the previously described particulate polymer, binder A, and/or binder B includes a cross-linkable monomer unit, the particulate polymer, binder A, and/or binder B may be cross-linked during drying of the slurry composition or during heat treatment that is optionally performed after drying (i.e., the functional layer may contain a cross-linked product of the previously described particulate polymer, binder A, and/or binder B). Note that the preferred ratio of components contained in the functional layer is the same as the preferred ratio of the components in the presently disclosed slurry composition for a non-aqueous secondary battery functional layer.

The functional layer that is formed using the presently disclosed slurry composition has excellent blocking resistance and also has excellent electrolyte solution injectability and adhesive capability. Consequently, a secondary battery having excellent electrolyte solution injectability and high-temperature cycle characteristics can be produced by using a battery member that includes this functional layer.

<Substrate>

No specific limitations are placed on the substrate onto which the slurry composition is applied and on which the functional layer is formed. For example, a separator substrate can be used as the substrate in a case in which the functional layer is used as a member that constitutes part of a separator, whereas an electrode substrate having an electrode mixed material layer formed on a current collector can be used as the substrate in a case in which the functional layer is used as a member constituting part of an electrode. No specific limitations are placed on the use of the functional layer formed on the substrate. For example, the functional layer may be formed on a separator substrate or the like and then used in this form as a battery member such as a separator. Alternatively, the functional layer may be formed on an electrode substrate and then used as an electrode. Further alternatively, the functional layer may be formed on a releasable substrate, peeled from the substrate, and then pasted onto another substrate to be used as a battery member.

However, it is preferable that a separator substrate or an electrode substrate is used as the substrate from a viewpoint of omitting a step of peeling a releasable substrate from the functional layer and raising battery member production efficiency.

<<Separator substrate>>

The separator substrate is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

Note that the separator substrate may include any layer that can display an expected function (other than the functional layer formed from the presently disclosed slurry composition) in part thereof. For example, the separator substrate may include a porous membrane layer that contains heat-resistant particles and a binder but does not contain either or both of the previously described particulate polymer and binder A in part thereof, and, more specifically, may include a porous membrane layer containing heat-resistant particles and a binder at one side or both sides of a microporous membrane formed of polyolefinic resin such as previously described. Note that the "heat-resistant particles" in the porous membrane layer can, for example, be any of those previously given as examples in the "Slurry composition for non-aqueous secondary battery functional layer" section. Moreover, the "binder" in the porous membrane layer can, for example, be any of those given as examples of the "binder B" in the "Slurry composition for non-aqueous secondary battery functional layer" section or can be any known binder.

«Electrode substrate»

The electrode substrate (positive/negative electrode substrate) is not specifically limited and may, for example, be an electrode substrate obtained by forming an electrode mixed material layer on a current collector.

The current collector, components in the electrode mixed material layer (for example, an electrode active material (positive/negative electrode active material) and a binder for an electrode mixed material layer (binder for a positive/-negative electrode mixed material layer)), and the method by which the electrode mixed material layer is formed on the current collector can be known examples thereof such as any of those described in JP2013-145763A, for example.

Note that the electrode substrate may include any layer having an expected function (other than the functional layer formed from the presently disclosed slurry composition) in part thereof (for example, the electrode substrate may include a porous membrane layer containing heat-resistant particles and a binder such as previously described in the "Separator substrate" section).

«Releasable substrate»

A known releasable substrate can be used as the releasable substrate without any specific limitations.

<Formation method of functional layer>

Examples of methods by which the functional layer may be formed on a substrate such as the separator substrate or the electrode substrate described above include:

(1) a method in which the slurry composition is applied onto the surface of the separator substrate or the electrode substrate (surface at the electrode mixed material layer-side in the case of the electrode substrate; same applies below) and is then dried;
(2) a method in which the separator substrate or the electrode substrate is immersed in the slurry composition and is then dried; and
(3) a method in which the slurry composition is applied onto a releasable substrate and is dried to produce a functional layer that is then transferred onto the surface of the separator substrate or the electrode substrate.

Of these methods, method (1) is particularly preferable since it allows simple control of the thickness of the functional layer. In more detail, method (1) includes a step (application step) of applying the slurry composition onto the separator substrate or the electrode substrate and a step (drying step) of drying the composition for a functional layer that has been applied onto the separator substrate or the electrode substrate to form a functional layer.

No specific limitations are placed on the method by which the slurry composition is applied onto the separator substrate or the electrode substrate in the application step. For example, a method such as spray coating, doctor blading, reverse roll coating, direct roll coating, gravure coating, extrusion coating, or brush coating may be used.

The slurry composition on the substrate can be dried by any commonly known method without any specific limitations in the drying step. Examples of drying methods that may be used include drying by warm, hot, or low-humidity air, drying in a vacuum, and drying through irradiation with infrared light, electron beams, or the like. Although no specific limitations are placed on the drying conditions, the drying temperature is preferably 30°C to 80°C and the drying time is preferably 30 seconds to 10 minutes.

The thickness of the functional layer that is formed on the substrate is preferably 0.1 μm or more, more preferably 0.3 μm or more, and even more preferably 0.5 μm or more, and is preferably 3.0 μm or less, more preferably 1.5 μm or less, and even more preferably 1.0 μm or less.

The shape of the functional layer that is formed on the substrate is not specifically limited, and the functional layer can be formed with any plan view shape such as a striped, dotted, or lattice shape. The formation of an adhesive layer with a dotted shape enables reduction of secondary battery resistance. A dotted functional layer can be obtained by using a coating machine to implement an inkjet method, for example.

Note that the diameter of dots of the functional layer that are arranged in a dotted pattern is preferably 10 μm or more, and more preferably 20 μm or more, and is preferably 300 μm or less, and more preferably 200 μm or less. When the diameter of dots of the functional layer is not less than any of the lower limits set forth above, adhesive strength between an electrode and a separator can be increased. On the other hand, when the diameter of dots of the functional layer is not more than any of the upper limits set forth above, deterioration of output characteristics of a secondary battery can be inhibited.

The thickness of dots of the functional layer that are arranged in a dotted pattern is preferably 5 $\mu$m or more. When the thickness of dots of the functional layer is not less than the lower limit set forth above, adhesive strength between an electrode and a separator can be increased.

(Separator for non-aqueous secondary battery)

The presently disclosed separator includes a separator substrate and a functional layer formed from the presently disclosed slurry composition on at least one surface of the separator substrate. The separator substrate and the functional layer that are constituents of the separator are each the same as those previously described in the "Functional layer" section.

Moreover, as a result of the presently disclosed separator including a functional layer formed using the presently disclosed slurry composition, the presently disclosed separator has excellent blocking resistance in a state prior to immersion in electrolyte solution and can adhere well to another adjacent battery member (for example, an electrode) via the functional layer after immersion in electrolyte solution. In addition, the presently disclosed separator can increase electrolyte solution injectability of a secondary battery and can cause a secondary battery to display excellent high-temperature cycle characteristics.

(Non-aqueous secondary battery)

The presently disclosed non-aqueous secondary battery includes the presently disclosed separator for a non-aqueous secondary battery set forth above. More specifically, the presently disclosed non-aqueous secondary battery includes a positive electrode, a negative electrode, a separator, and an electrolyte solution, wherein the separator is the presently disclosed separator for a non-aqueous secondary battery that includes a separator substrate and a functional layer.

The presently disclosed non-aqueous secondary battery has excellent electrolyte solution injectability and high-temperature cycle characteristics as a result of including the presently disclosed separator for a non-aqueous secondary battery.

<Positive electrode and negative electrode>

In the presently disclosed secondary battery, at least the separator includes a functional layer, and the positive electrode and the negative electrode may also each include a functional layer. An electrode produced by forming an electrode mixed material layer on a current collector to form an electrode substrate and then providing a functional layer on the electrode substrate may be used as a positive electrode or negative electrode that includes a functional layer. Note that the electrode substrate and the separator substrate can be the same as those that were previously described in the "Functional layer" section.

Moreover, an electrode formed of an electrode substrate such as previously described can be used without any specific limitations as a positive electrode or negative electrode that does not include a functional layer.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)_2NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and methyl ethyl carbonate (MEC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The secondary battery can be produced by, for example, stacking the positive electrode and the negative electrode with the presently disclosed separator for a non-aqueous secondary battery in-between, performing rolling, folding, or the like of the resultant laminate, as necessary, to place the laminate in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Measurements and evaluations of various attributes in the examples and comparative examples were performed according to the following methods.

<Glass-transition temperature>

A water dispersion of a polymer (particulate polymer or binder B) serving as a measurement subject was dried at a temperature of 25°C for 48 hours to obtain a powdered measurement sample.

The measurement sample was weighed into an aluminum pan in an amount of 10 mg and was measured by a differential scanning calorimeter (produced by SII NanoTechnology Inc.; product name: EXSTAR DSC6220) under conditions stipulated in JIS Z8703 in a measurement temperature range of -100°C to 200°C with a heating rate of 20°C/min to obtain a differential scanning calorimetry (DSC) curve. Note that an empty aluminum pan was used as a reference. The temperature at which a derivative signal (DDSC) displayed a peak in this heating process was determined as the glass-transition temperature (°C). Note that in a situation in which a plurality of peaks were measured, the temperature at which a peak of large displacement was displayed was taken to be the glass-transition temperature of the polymer.

<Volume-average particle diameter>

The volume-average particle diameter of a polymer was measured by laser diffraction. Specifically, a water dispersion of the polymer that was adjusted to a solid content concentration of 0.1 mass% was used as a sample. Moreover, in a particle diameter distribution (by volume) measured using a laser diffraction particle size analyzer (produced by Beckman Coulter, Inc.; product name: LS-13 320), the particle diameter D50 at which cumulative volume calculated from a small diameter end of the distribution reached 50% was taken to be the volume-average particle diameter.

<Yellowness index>

A polymer obtained as a binder A in each example or comparative example was measured out in an amount of 0.6 g, 19.4 g of water was added thereto, and the polymer was dissolved under heating at 80°C for 3 hours to obtain a 3 mass% aqueous solution of the polymer. The obtained 3 mass% aqueous solution was used as a measurement sample to measure the yellowness index (YI value) using a spectrophotometer. The measurement sample was heated in a 93°C water bath, and was taken into a quartz cell (optical path length: 10 mm) promptly once the internal temperature reached 90°C. Tristimulus values X, Y, and Z in an XYZ color system were determined based on transmittance measured at intervals of 1 nm in a range of not less than 250 nm and not more than 800 nm by a spectrophotometric method in accordance with JIS K7373-2006 using a UH-4150 (produced by Hitachi, Ltd.) as a spectrophotometer and also using an auxiliary illuminant C and a 2° viewing field, and then the YI value was calculated from the values of X, Y, and Z by the following formula.

$$Yellowness\ index\ (YI) = 100(1.2769X - 1.0592Z)/Y$$

<Adhesiveness after immersion in electrolyte solution>

A single-layer polyethylene separator (thickness: 12 μm) produced by a wet method was prepared as a separator substrate. A slurry composition produced in each example or comparative example was applied onto one surface of this separator substrate, and the slurry composition on the separator substrate was dried at 50°C for 10 minutes to form a functional layer (coating area density: 0.2 g/m$^2$). The separator including this functional layer at one side was used as a separator for evaluation.

In addition, a negative electrode was produced in the same way as in Example 1 described further below and was taken to be a negative electrode for evaluation.

The negative electrode for evaluation and separator for evaluation that were obtained as described above were each cut out as a rectangular shape of 10 mm × 100 mm. The negative electrode mixed material layer of the negative electrode was arranged along the surface of the functional layer of the separator to obtain a test specimen, and this test specimen was placed inside laminate packing together with approximately 400 μL of electrolyte solution (solvent: ethylene carbonate (EC)/diethyl carbonate (DEC)/vinylene carbonate (VC) (volume ratio) = 68.5/30/1.5; electrolyte: LiPF$_6$ of 1 M in concentration). Once 12 hours had passed, the test specimen, together with the laminate packing, was pressed at 80°C with a pressure of 1.0 MPa for 10 minutes.

The test specimen was then taken out, and electrolyte solution on the surface of the test specimen was wiped off. Next, the test specimen was placed with the surface at the current collector-side of the negative electrode facing downward, and cellophane tape was affixed to the surface at the current collector-side of the negative electrode. Tape prescribed by JIS Z1522 was used as the cellophane tape. The cellophane tape was fixed to a horizontal test stage in advance. The stress when the separator was peeled off by pulling one end of the separator vertically upward at a pulling speed of 50 mm/min was measured. Three measurements were made in this manner. An average value of the stress was determined as the peel strength and was evaluated by the following standard. A larger peel strength indicates that the functional layer has better adhesiveness after immersion in electrolyte solution and that a separator and an electrode (negative electrode) can be strongly adhered via the functional layer in electrolyte solution.

A: Peel strength of 6.0 N/m or more
B: Peel strength of not less than 2.0 N/m and less than 6.0 N/m
C: Peel strength of not less than 0.5 N/m and less than 2.0 N/m
D: Peel strength of less than 0.5 N/m

<Electrolyte solution injectability>

Electrolyte solution (solvent: ethylene carbonate (EC)/diethyl carbonate (DEC)/vinylene carbonate (VC) (volume ratio) = 68.5/30/1.5; electrolyte: LiPF$_6$ of 1 M in concentration) was injected into a lithium ion secondary battery produced in each example or comparative example. The inside of the lithium ion secondary battery was depressurized to -100 kPa, and this state was maintained for 1 minute. Thereafter, heat sealing was performed. After 10 minutes, an electrode (positive electrode) was dismantled, and the impregnation state of electrolyte solution in the electrode was visually checked. An evaluation was made by the following standard. Impregnation of a larger portion of the electrode with the electrolyte solution indicates higher electrolyte solution injectability.

A: Entire surface of electrode impregnated with electrolyte solution
B: Portion of less than 1 cm$^2$ remains unimpregnated with electrolyte solution in electrode (excluding case in which entire surface is impregnated)
C: Portion of not less than 1 cm$^2$ and less than 2 cm$^2$ remains unimpregnated with electrolyte solution in electrode
D: Portion of 2 cm$^2$ or more remains unimpregnated with electrolyte solution in electrode

<Blocking resistance>

A separator that was the same as the separator including a functional layer at one side that was formed in evaluation of "Adhesiveness after immersion in electrolyte solution" was cut to a square shape of 5 cm in width by 5 cm in length to obtain two square pieces. Next, the two square pieces were overlapped with the respective surfaces at which a functional layer had been formed on a separator substrate facing each other, were placed under 0.1 MPa of pressure at a temperature of 40°C, and were left in this state for 24 hours to produce a test specimen in a pressed state (pressed test specimen). The state of adhesion of the two overlapped square pieces in the pressed test specimen after being left for 24 hours was visually checked, and blocking resistance was evaluated in accordance with the following standard. Note that in a case in which the two overlapped square pieces were adhered to each other, the entirety of one of the two square pieces was fixed in place, and the other of the square pieces was pulled with a force of 0.3 N/m in order to confirm whether the square pieces could be peeled apart. Less adhesion of the two overlapped square pieces indicates that the separator including a functional layer has better blocking resistance.

A: Two square pieces are not adhered
B: Two square pieces are adhered but can be peeled apart when pulled
C: Two square pieces are adhered and cannot be peeled apart when pulled

<High-temperature cycle characteristics>

A secondary battery produced in each example or comparative example was left at rest in a 25°C environment for 24 hours after injection of electrolyte solution. The thickness of the battery at this time was measured by a caliper. Next, the secondary battery was subjected to a charge/discharge operation of charging to 4.2 V by a constant current-constant voltage (CC-CV) method with a charge rate of 1C (cut-off condition: 0.02C) and then discharging to 3.0 V by a constant current (CC) method with a discharge rate of 1C at 25°C. In addition, the same charge/discharge operation was repeated in a 45°C environment, and the thickness of the battery after 300 cycles was measured using a caliper. The proportional increase of thickness of the battery after cycling relative to before cycling was evaluated as a swelling property of the battery. A smaller proportional increase of the thickness of the battery after cycling relative to before cycling indicates a better swelling property.

A: Proportional increase of battery thickness after cycling relative to before cycling of less than 1%
B: Proportional increase of battery thickness after cycling relative to before cycling of not less than 1% and less than 5%
C: Proportional increase of battery thickness after cycling relative to before cycling of not less than 5% and less than 10%
D: Proportional increase of battery thickness after cycling relative to before cycling of 10% or more

<Rate characteristics>

A secondary battery produced in each example or comparative example was left at rest at a temperature of 25°C for 5 hours after injection of electrolyte solution. Next, the secondary battery was charged to a cell voltage of 3.65 V by a 0.2C constant-current method at a temperature of 25°C and was then subjected to 12 hours of aging at a temperature of 60°C. The secondary battery was subsequently discharged to a cell voltage of 3.00 V by a 0.2C constant-current method at a temperature of 25°C. Thereafter, CC-CV charging of the secondary battery was performed with a 0.2C constant current (upper limit cell voltage: 4.35 V) and CC discharging of the secondary battery was performed to a cell voltage of 3.00 V with a 0.2C constant current. This charging and discharging at 0.2C was repeated three times.

Next, constant-current charging and discharging at 0.2C was performed between cell voltages of 4.2 V and 3.00 V in an environment having a temperature of 25°C, and the discharge capacity at this time was defined as C0. Thereafter, the secondary battery was CC-CV charged with a 0.2C constant current in the same manner, was then discharged to 3.0 V with a 0.5C constant current in an environment having a temperature of -10°C, and the discharge capacity at this time was defined as C1. A capacity maintenance rate expressed by $\Delta C = (C1/C0) \times 100(\%)$ was determined as a rate characteristic and was evaluated by the following standard. A larger value for this capacity maintenance rate $\Delta C$ indicates lower internal resistance and higher discharge capacity at high current in a low temperature environment.

A: Capacity maintenance rate $\Delta C$ of 70% or more
B: Capacity maintenance rate $\Delta C$ of less than 70%

(Example 1)

<Production of particulate polymer>

A polymer having a core-shell structure was produced as a particulate polymer.

In core portion formation, a 5 MPa pressure-resistant vessel equipped with a stirrer was charged with 45.7 parts of styrene as an aromatic monovinyl monomer, 28.2 parts of 2-ethylhexyl acrylate as a (meth)acrylic acid ester monomer, 8.5 parts of acrylonitrile as a nitrile group-containing monomer, 0.1 parts of ethylene glycol dimethacrylate as a cross-linkable monomer, 2.5 parts of methacrylic acid as an acidic group-containing monomer, 0.3 parts of sodium dodecylbenzenesulfonate as an emulsifier, 150 parts of deionized water, and 0.3 parts of potassium persulfate as a polymerization initiator. These materials were thoroughly stirred and were subsequently heated to 70°C to initiate polymerization. Polymerization was continued until a polymerization conversion rate of 96% was reached to yield a water dispersion containing a particulate polymer forming a core portion. Next, at the point at which the polymerization conversion rate reached 96%, 10.0 parts of styrene as an aromatic monovinyl monomer, 4.5 parts of acrylonitrile as a nitrile group-containing monomer, and 0.5 parts of methacrylic acid as an acidic group-containing monomer were continuously added for shell portion formation, the temperature was raised to 70°C, and polymerization was continued. At the point at which the conversion rate reached 96%, cooling was performed to quench the reaction to yield a water dispersion of a particulate polymer. The obtained particulate polymer had a core-shell structure in which the outer surface of a core portion was partially covered by a shell portion.

The glass-transition temperature and volume-average particle diameter of the obtained particulate polymer were measured. The results are shown in Table 1.

<Production of binder B>

A 5 MPa pressure-resistant vessel equipped with a stirrer was charged with 62.2 parts of styrene as an aromatic monovinyl monomer, 33.0 parts of 1,3-butadiene as an aliphatic conjugated diene monomer, 3.8 parts of itaconic acid as an acidic group-containing monomer, 1.0 parts of 2-hydroxyethyl acrylate as a hydroxy group-containing monomer, 0.4 parts of sodium dodecylbenzenesulfonate as an emulsifier, 150 parts by mass of deionized water, and 0.5 parts of potassium persulfate as a polymerization initiator. These materials were thoroughly stirred and were subsequently heated to 50°C to initiate polymerization. At the point at which the polymerization conversion rate reached 96%, cooling was performed to quench the reaction to yield a mixture containing a polymer. The mixture containing the polymer was adjusted to pH 8 through addition of 5% sodium hydroxide aqueous solution and was then subjected to thermal-vacuum distillation to remove unreacted monomer from the mixture. Thereafter, the mixture was cooled to 30°C or lower to yield a water dispersion of a binder B.

The glass-transition temperature of the obtained binder B was measured. The result is shown in Table 1.

<Production of binder A>

A 10 L septum-equipped flask was charged with 2,660 g of deionized water and 42 g of anhydrous sodium sulfate, and the inside of the flask was purged with nitrogen gas at a flow rate of 100 mL/min. Next, 3.5 g of partially saponified polyvinyl alcohol (degree of saponification: 90%) as a dispersant and 3.5 g of lauryl peroxide as a polymerization initiator were added into the flask, and the internal temperature of the flask was raised to 60°C. Thereafter, 179 g of methyl acrylate as an ethylenically unsaturated carboxylic acid ester monomer and 720 g of vinyl acetate as a vinyl ester were mixed, were added dropwise into the flask by a dropping funnel over 4 hours, and the internal temperature of the flask was held at 65°C for 2 hours. Thereafter, 1,558 g of methanol, 1,445 g of water, 455 g of lithium hydroxide as an alkali metal compound, and 1.82 g of ascorbic acid as a reductant were added by split addition over 10 hours in a 30°C environment. Once the entire amount thereof had been added, 3 hours of stirring was performed under a condition of 30°C. Once this stirring was complete, solids were separated by filtration, were washed with methanol, and were dried at 70°C for 8 hours to yield a copolymer of vinyl alcohol and lithium-neutralized methyl acrylate as a binder A. The obtained binder A was measured by $^1$H-NMR and was confirmed to include a vinyl alcohol unit and a methyl acrylate unit having a lithium salt group.

<Production of slurry composition for non-aqueous secondary battery functional layer>

A mixture was obtained by mixing 100 parts (in terms of solid content) of the water dispersion of the particulate polymer, 2.0 parts of the binder A, 10 parts (in terms of solid content) of the water dispersion of the binder B, and 2 parts (in terms of solid content) of NOPTECHS® ED-052 (NOPTECHS is a registered trademark in Japan, other countries, or both; produced by San Nopco Limited) as a wetting agent in a stirring vessel.

The obtained mixture was diluted with deionized water to obtain a slurry composition (solid content concentration: 10%). This slurry composition was used to produce a separator including a functional layer at one side, and then adhesiveness of the functional layer after immersion in electrolyte solution and blocking resistance of the separator including the functional layer were evaluated. The results are shown in Table 1.

<Production of separator including functional layers at both sides>

A microporous membrane made of polyethylene (produced by Asahi Kasei Corporation; product name: ND412; thickness: 12 μm) was prepared. A ceramic slurry (produced by Zeon Corporation; product name: BM-2000M; containing alumina as heat-resistant particles and a binder) was applied onto the surface of the prepared microporous membrane and was dried at a temperature of 50°C for 3 minutes to obtain a separator substrate including a porous membrane layer at one side (porous membrane layer thickness: 3 μm).

The slurry composition for a non-aqueous secondary battery functional layer described above was applied onto a surface at the porous membrane layer-side of the separator substrate described above and was dried at a temperature of 50°C for 3 minutes. The same operation was performed with respect to the other surface of the separator substrate to obtain a separator including functional layers at both sides (functional layer thickness: each 0.6 μm).

<Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic monovinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were subsequently heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part in terms of solid content of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to $3,000 \pm 500$ mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 μm in thickness serving as a current collector by a comma coater such as to have a coating weight of $11 \pm 0.5$ mg/cm$^2$. Thereafter, the copper foil with the slurry composition for a negative electrode mixed material layer applied thereon was conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

The negative electrode mixed material layer-side of the produced negative electrode web was subsequently roll pressed under a condition of a line pressure of 11 t (tons) in an environment having a temperature of $25 \pm 3$°C to obtain a negative electrode having a negative electrode mixed material layer density of 1.60 g/cm$^3$. Thereafter, the negative electrode was left in an environment having a temperature of $25 \pm 3$°C and a relative humidity of $50 \pm 5$% for 1 week.

<Production of positive electrode>

A slurry composition for a positive electrode mixed material layer was produced by adding 96 parts of a lithium complex oxide of Co-Ni-Mn (CELLSEED® (CELLSEED is a registered trademark in Japan, other countries, or both); NMC111; $LiNi_{1/3}Co_{1/3}Mn_{1/3}O_2$) as a positive electrode active material, 2 parts of acetylene black (produced by Denka Company Limited; product name: HS-100) as a conductive material, and 2 parts of polyvinylidene fluoride (produced by Kureha Corporation; product name: KF-1100) as a binder into a planetary mixer, further adding N-methyl-2-pyrrolidone (NMP) as a dispersion medium so as to adjust the total solid content concentration to 67%, and mixing these materials.

Next, the obtained slurry composition for a positive electrode mixed material layer was applied onto aluminum foil of 20 μm in thickness serving as a current collector by a comma coater such as to have a coating weight of $20 \pm 0.5$ mg/cm$^2$.

The aluminum foil was conveyed inside an oven having a temperature of 90°C for 2 minutes and an oven having a temperature of 120°C for 2 minutes at a speed of 200 mm/min so as to dry the slurry composition on the aluminum foil and obtain a positive electrode web having a positive electrode mixed material layer formed on the current collector.

The positive electrode mixed material layer-side of the produced positive electrode web was subsequently roll pressed under a condition of a line pressure of 14 t (tons) in an environment having a temperature of 25 ± 3°C to obtain a positive electrode having a positive electrode mixed material layer density of 3.40 g/cm³. Thereafter, the positive electrode was left in an environment having a temperature of 25 ± 3°C and a relative humidity of 50 ± 5% for 1 week.

<Production of secondary battery>

A wound cell (discharge capacity equivalent to 520 mAh) was produced using the separator including functional layers at both sides, the negative electrode, and the positive electrode that were obtained as described above and was arranged inside of aluminum packing. The wound cell, together with the aluminum packing, was pressed at a temperature of 70°C and a pressure of 1.0 MPa for 8 seconds using a hot flat-plate pressing machine so as to adhere the separator and the electrodes (negative electrode and positive electrode).

Thereafter, electrolyte solution was loaded into the aluminum packing. Note that the electrolyte solution was a solution obtained by dissolving $LiPF_6$ (supporting electrolyte) with a concentration of 1 mol/L in a mixed solvent of ethylene carbonate (EC), diethyl carbonate (DEC), and vinylene carbonate (VC) (volume ratio: EC/DEC/VC = 68.5/30/1.5). The aluminum packing was then closed by heat sealing at a temperature of 150°C to tightly seal an opening of the aluminum packing and thereby produce a lithium ion secondary battery. This lithium ion secondary battery was used to evaluate electrolyte solution injectability, rate characteristics, and high-temperature cycle characteristics. The results are shown in Table 1.

(Examples 2 and 3)

Various operations were performed in the same way as in Example 1 with the exception that in production of the particulate polymer, the types and proportions of monomers used in core portion formation were changed as indicated in Table 1. The obtained particulate polymer had a core-shell structure in which the outer surface of a core portion was partially covered by a shell portion. Moreover, various measurements and evaluations were performed in the same way as in Example 1. The results are shown in Table 1.

(Example 4)

A polymer not having a core-shell structure was produced as a particulate polymer.

A 5 MPa pressure-resistant vessel equipped with a stirrer was charged with 65.5 parts of styrene as an aromatic monovinyl monomer, 24.0 parts of butyl acrylate as a (meth)acrylic acid ester monomer, 0.5 parts of ethylene glycol dimethacrylate and 10.0 parts of glycidyl methacrylate as cross-linkable monomers, 0.3 parts of sodium dodecylbenzenesulfonate as an emulsifier, 150 parts of deionized water, and 0.3 parts of potassium persulfate as a polymerization initiator. These materials were thoroughly stirred and were then heated to 70°C to initiate polymerization. Polymerization was continued until a polymerization conversion rate of 96% was reached to yield a water dispersion containing a particulate polymer that did not have a core-shell structure.

With the exception of this point, various operations, measurements, and evaluations were performed in the same way as in Example 1. The results are shown in Table 1.

(Example 5)

A polymer not having a core-shell structure was produced in the same way as in Example 4 with the exception that the production conditions of the particulate polymer were changed such that the volume-average particle diameter of the obtained particulate polymer was 4 μm. In production of a slurry composition, a mixture was obtained by mixing 30 parts (in terms of solid content) of the water dispersion of the particulate polymer obtained in this manner, 3 parts (in terms of solid content) of the water dispersion of the binder B, 2.0 parts of the binder A, 70 parts of alumina (AKP-3000 produced by Sumitomo Chemical Co., Ltd.; volume-average particle diameter D50: 0.7 μm) as heat-resistant particles, and 0.2 parts (in terms of solid content) of NOPTECHS® ED-52 (produced by San Nopco Limited) as a wetting agent in a stirring vessel.

The obtained mixture was diluted with deionized water to obtain a slurry composition (solid content concentration: 40%). This slurry composition was used to produce a separator including a functional layer at one side, and then adhesiveness of the functional layer after immersion in electrolyte solution and blocking resistance of the separator including the functional layer were evaluated. The results are shown in Table 1. Moreover, the slurry composition obtained in this manner was used to perform various operations, measurements, and evaluations in the same way as in Example 1. The results are shown in Table 1.

(Example 6)

Various operations, measurements, and evaluations were performed in the same way as in Example 1 with the exception that a particulate polymer produced as described below was used as a binder B. The results are shown in Table 1.

<Production of binder B>

A reactor including a stirrer was supplied with 70 parts of deionized water, 0.15 parts of sodium lauryl sulfate (produced by Kao Corporation; product name: EMAL® 2F (EMAL is a registered trademark in Japan, other countries, or both)) as an emulsifier, and 0.5 parts of ammonium persulfate. The gas phase was purged with nitrogen gas, and the temperature was raised to 60°C.

A monomer composition was obtained in a separate vessel by mixing 50 parts of deionized water, 0.5 parts of sodium dodecylbenzenesulfonate as a dispersant, 79.0 parts of n-butyl acrylate as a (meth)acrylic acid ester monomer, 2.5 parts of methacrylic acid as an acidic group-containing monomer, 3.5 parts of N-methylolacrylamide as a cross-linkable monomer, and 15.0 parts of acrylonitrile as a nitrile group-containing monomer. The monomer composition was continuously added into the reactor over 4 hours to perform polymerization. The reaction was carried out at 60°C during the addition. Once the addition was complete, a further 3 hours of stirring was performed at 70°C, and then the reaction was ended to produce a water dispersion containing a binder B.

(Example 7)

Various operations, measurements, and evaluations were performed in the same way as in Example 1 with the exception that a particulate polymer produced as described below was used as a binder B. The results are shown in Table 1.

<Production of binder B>

The chemical composition of the monomer composition used in production of the binder B was changed as indicated in Table 1. Specifically, the amounts of n-butyl acrylate and acrylonitrile were reduced as indicated in Table 1, and 15 parts of glycidyl methacrylate was compounded in addition to 3.5 parts of N-methylolacrylamide as a cross-linkable monomer. With the exception of this point, a water dispersion containing a binder B was produced in the same way as in Example 6.

(Example 8)

Various operations, measurements, and evaluations were performed in the same way as in Example 1 with the exception that a polymer produced as described below was used as a binder A. The results are shown in Table 1.

<Production of binder A>

A copolymer of vinyl alcohol and sodium-neutralized methyl acrylate was obtained as a binder A in the same way as in Example 1 with the exception that 1.82 g of sodium thiosulfate was used instead of ascorbic acid as a reductant and 455 g of sodium hydroxide was used as an alkali metal compound. The obtained binder A was measured by $^1$H-NMR and was confirmed to include a vinyl alcohol unit and a methyl acrylate unit having a sodium salt group.

(Examples 9 and 10)

Various operations, measurements, and evaluations were performed in the same way as in Example 1 with the exception that the amount of the binder A was changed as indicated in Table 2. The results are shown in Table 2.

(Example 11)

Various operations, measurements, and evaluations were performed in the same way as in Example 1 with the exception that polyvinyl acetate (Polyvinyl Acetate produced by Techno Chemical Corp.), which is a homopolymer, was used as a particulate polymer. The results are shown in Table 2.

(Comparative Example 1)

Various operations, measurements, and evaluations were performed in the same way as in Example 1 with the exception that a particulate polymer was not compounded. The results are shown in Table 2.

(Comparative Example 2)

Various operations, measurements, and evaluations were performed in the same way as in Example 1 with the exception that a particulate polymer having a glass-transition temperature of higher than 95°C that was produced by changing the chemical composition of the monomer composition as indicated in Table 2 in production of the particulate polymer was used. The obtained particulate polymer had a core-shell structure in which the outer surface of a core portion was partially covered by a shell portion. The results are shown in Table 2.

(Comparative Example 3)

Various operations, measurements, and evaluations were performed in the same way as in Example 1 with the exception that a polymer synthesized as described below was compounded instead of the binder A (compounding indicated in row for binder A in Table 2 for convenience). The results are shown in Table 2.

<Synthesis of polymer compounded instead of binder A>

A 10 L septum-equipped flask was charged with 2,660 g of deionized water and 42 g of anhydrous sodium sulfate, and the inside of the flask was purged with nitrogen gas at a flow rate of 100 mL/min. Next, 3.5 g of partially saponified polyvinyl alcohol (degree of saponification: 90%) as a dispersant and 3.5 g of lauryl peroxide as a polymerization initiator were added into the flask, and the internal temperature of the flask was raised to 60°C. Thereafter, 179 g of methyl acrylate as an ethylenically unsaturated carboxylic acid ester monomer and 720 g of vinyl acetate as a vinyl ester were mixed, were added dropwise into the flask by a dropping funnel over 4 hours, and the internal temperature of the flask was held at 65°C for 2 hours. Once 2 hours had passed, solids were separated from the reaction liquid by filtration, were washed with methanol, and were dried at 70°C for 8 hours to yield a polymer including a vinyl acetate unit and a methyl acrylate unit. In measurement of the obtained polymer by $^1$H-NMR, a vinyl alcohol unit and an alkali metal salt group were not detected.

(Comparative Example 4)

Various operations were performed in the same way as in Example 1 with the exception that in production of the particulate polymer, the chemical composition of the monomer composition was changed as indicated in Table 2 such that the glass-transition temperature changed to 20°C. The obtained particulate polymer had a core-shell structure in which the outer surface of a core portion was partially covered by a shell portion. Moreover, various measurements and evaluations were performed in the same way as in Example 1. The results are shown in Table 2.

In Tables 1 and 2, shown below:

"ST" indicates styrene unit;
"EDMA" indicates ethylene glycol methacrylate unit;
"GMA" indicates glycidyl methacrylate unit;
"NMA" indicates N-methylolacrylamide unit;
"MAA" indicates methacrylic acid unit;
"2EHA" indicates 2-ethylhexyl acrylate unit;
"BA" indicates n-butyl acrylate unit;
"AN" indicates acrylonitrile unit;
"MMA" indicates methyl methacrylate unit;
"IA" indicates itaconic acid unit;
"BD" indicates 1,3-butadiene unit; and
"βHEA" indicates 2-hydroxyethyl acrylate unit.

[Table 1]

| | | | Example 1 | Example 2 | Example 3 | Example 4 | Example 5 | Example 6 | Example 7 | Example 8 |
|---|---|---|---|---|---|---|---|---|---|---|
| Particulate polymer | | Type | Core-shell structure copolymer | Core-shell structure copolymer | Core-shell structure copolymer | Non-core-shell copolymer | Non-core-shell copolymer | Core-shell structure copolymer | Core-shell structure copolymer | Core-shell structure copolymer |
| | Chemical composition (core) (mass%) *chemical composition of copolymer for non-core-shell | Aromatic monovinyl unit — ST | 45.7 | 53.1 | 35.9 | 65.5 | 65.5 | 45.7 | 45.7 | 45.7 |
| | | (Meth)acrylic acid ester unit — 2EHA | 28.2 | 20.8 | 37.9 | - | - | 28.2 | 28.2 | 28.2 |
| | | Nitrile group-containing unit — AN | 8.5 | 8.5 | 8.5 | - | - | 9 | 9 | 9 |
| | | Cross-linkable unit — EDMA | 0.1 | 0.1 | 0.1 | 0.5 | 0.5 | 0.1 | 0.1 | 0.1 |
| | | Acidic group-containing unit — MAA | 2.5 | 2.6 | 2.6 | - | - | 2.5 | 2.5 | 2.5 |
| | | (Meth)acrylic acid ester unit — BA | - | - | - | 24 | 24 | - | - | - |
| | | Cross-linkable unit — GMA | - | - | - | 10 | 10 | - | - | - |
| | Chemical composition (shell) (mass%) | Aromatic monovinyl unit — ST | 10 | 10 | 10 | - | - | 10 | 10 | 10 |
| | | Nitrile group-containing unit — AN | 4.5 | 4.5 | 4.5 | - | - | 4.5 | 4.5 | 4.5 |
| | | Acidic group-containing unit — MAA | 0.5 | 0.5 | 0.5 | - | - | 0.5 | 0.5 | 0.5 |
| Glass-transition temperature (°C) | | | 54 | 74 | 38 | 70 | 70 | 54 | 54 | 54 |

| | | | | Example 1 | Example 2 | Example 3 | Example 4 | Example 5 | Example 6 | Example 7 | Example 8 |
|---|---|---|---|---|---|---|---|---|---|---|---|
| Slurry composition for functional layer | | | Volume-average particle diameter D50 (μm) | 0.7 | 0.7 | 0.7 | 0.5 | 4 | 0.7 | 0.7 | 0.7 |
| | | | Amount (parts by mass) | 100 | 100 | 100 | 100 | 50 | 100 | 100 | 100 |
| | Binder B | | Type | Aromatic vinyl polymer | | | | | Acrylic polymer | | Aromatic vinyl polymer |
| | | Chemical composition (mass%) | Aromatic monovinyl unit — ST | 622 | 622 | 622 | 622 | 62.2 | - | - | 62.2 |
| | | | Aliphatic conjugated diene unit — BD | 33 | 33 | 33 | 33 | 33 | - | - | 33 |
| | | | Acidic group-containing unit — IA | 3.8 | 3.8 | 3.8 | 3.8 | 3.8 | - | - | 3.8 |
| | | | Hydroxy group-containing unit — βHEA | 1 | 1 | 1 | 1 | 1 | - | - | 1 |
| | | | Acidic group-containing unit — MAA | - | - | - | - | - | 2.5 | 2.5 | - |
| | | | (Meth)acrvlic acid ester unit — BA | - | - | - | - | - | 79 | 70 | - |
| | | | Nitrile group-containing unit — AN | - | - | - | - | - | 15 | 9 | - |
| | | | Cross-linkable unit — NMA | - | - | - | - | - | 3.5 | 3.5 | - |
| | | | Cross-linkable unit — GMA | - | - | - | - | - | - | 15 | - |
| | | | Glass-transition temperature (°C) | 12 | 12 | 12 | 12 | 12 | -8 | -12 | 12 |
| | | | Amount (parts by mass) | 10 | 10 | 10 | 10 | 10 | 10 | 10 | 10 |

EP 4 503 305 A1

(continued)

| | | | | Example 1 | Example 2 | Example 3 | Example 4 | Example 5 | Example 6 | Example 7 | Example 8 |
|---|---|---|---|---|---|---|---|---|---|---|---|
| | Binder A | Monomer chemical composition (mass%) | Methyl acrylate | 20 | 20 | 20 | 20 | 20 | 20 | 20 | 20 |
| | | | Vinyl acetate | 80 | 80 | 80 | 80 | 80 | 80 | 80 | 80 |
| | | Reductant | Type | Ascorbic acid | | | | | | | Sodium thiosulfate |
| | | | Amount (parts bv mass) | 0.2 | 0.2 | 0.2 | 0.2 | 0.2 | 0.2 | 0.2 | 0.2 |
| | | Alkali metal compound | Type | LiOH | LiOH | LiOH | LiOH | LiOH | LiOH | LiOH | NaOH |
| | | | Amount (parts by mass) | 50 | 50 | 50 | 50 | 50 | 50 | 50 | 50 |
| | | Inclusion of hydroxy group/acidic functional group and alkali metal salt group | | Yes | Yes | Yes | Yes | Yes | Yes | Yes | Yes |
| | | Yellowness index (-) | | 9.2 | 92 | 92 | 92 | 92 | 92 | 92 | 10.8 |
| | | Amount (parts by mass) | | 2.0 | 2.0 | 2.0 | 2.0 | 2.0 | 2.0 | 2.0 | 2.0 |
| | Heat-resis-tant parti-cles | Type | | - | - | - | - | Alumina | - | - | - |
| | | Volume-average particle diameter (um) | | - | - | - | - | 0.5 | - | - | - |
| | | Amount (parts by mass) | | - | - | - | - | 70 | - | - | - |
| Evaluation | Adhesiveness after electrolyte solution immersion | | | A | B | A | B | B | A | A | B |
| | Electrolyte solution injectabilit y | | | A | A | A | A | A | A | A | A |
| | Blocking resistance | | | A | A | B | A | A | A | B | A |
| | High-temperature cycle characteristics | | | A | B | A | B | B | A | A | B |
| | Rate characteristics | | | A | A | A | A | B | A | A | A |

EP 4 503 305 A1

[Table 2]

| | | | | Example 9 | Example 10 | Example 11 | Comparative Example 1 | Comparative Example 2 | Comparative Example 3 | Comparative Example 4 |
|---|---|---|---|---|---|---|---|---|---|---|
| Particulate polymer | | Type | | Core-shell structure copolymer | | Polyvinyl acetate | None | Core-shell structure copolymer | | |
| | Chemical composition (core) (mass%) *chemical composition of copolymer for non-core-shell | Aromatic monovinyl unit | ST | 45.7 | 45.7 | - | - | 51.5 | 45.7 | 22 |
| | | (Meth)acrylic acid ester unit | 2EHA | 28.2 | 28.2 | - | - | 9.3 | 28.2 | 38.8 |
| | | Nitrile group-containing unit | AN | 9 | 9 | - | - | 7 | 9 | 7 |
| | | Cross-linkable unit | EDMA | 0.1 | 0.1 | - | - | 0.1 | 0.1 | 0.1 |
| | | Acidic group-containing unit | MAA | 2.5 | 2.5 | - | - | 2.1 | 2.5 | 2.1 |
| | | (Meth)acrylic acid ester unit | BA | - | - | - | - | - | - | - |
| | | Cross-linkable unit | GMA | - | - | - | - | - | - | - |
| | Chemical composition (shell) (mass%) | Aromatic monovinyl unit | ST | 10 | 10 | - | - | 28.2 | 10 | 28.2 |
| | | Nitrile group-containing unit | AN | 4.5 | 4.5 | - | - | 1.5 | 4.5 | 1.5 |
| | | Acidic group-containing unit | MAA | 0.5 | 0.5 | - | - | 0.3 | 0.5 | 0.3 |
| | Glass-transition temperature (°C) | | | 54 | 54 | 32 | - | 108 | 54 | 20 |

(continued)

| | | | | Example 9 | Example 10 | Example 11 | Comparative Example 1 | Comparative Example 2 | Comparative Example 3 | Comparative Example 4 |
|---|---|---|---|---|---|---|---|---|---|---|
| Slurry composition for functional layer | | | Volume-average particle diameter D50 (μm) | 0.7 | 0.7 | 0.7 | - | 0.7 | 0.7 | 0.7 |
| | | | Amount (parts by mass) | 100 | 100 | 100 | 0 | 100 | 100 | 100 |
| | Binder B | | Type | Aromatic vinyl polymer | | | Aromatic vinyl polymer | | | |
| | | Chemical composition (mass%) | Aromatic monovinyl unit / ST | 622 | 622 | 62.2 | 622 | 622 | 62.2 | 62.2 |
| | | | Aliphatic conjugated diene unit / BD | 33 | 33 | 33 | 33 | 33 | 33 | 33 |
| | | | Acidic group-containing unit / IA | 3.8 | 3.8 | 3.8 | 3.8 | 3.8 | 3.8 | 3.8 |
| | | | Hydroxy group-containing unit / SHEA | 1 | 1 | 1 | 1 | 1 | 1 | 1 |
| | | | Acidic group-containing unit / MAA | - | - | - | - | - | - | - |
| | | | (Meth)acrylic acid ester unit / BA | - | - | - | - | - | - | - |
| | | | Nitrile group-containing unit / AN | - | - | - | - | - | - | - |
| | | | Cross-linkable unit / NMA | - | - | - | - | - | - | - |
| | | | Cross-linkable unit / GMA | - | - | - | - | - | - | - |
| | | Glass-transition temperature (°C) | | 12 | 12 | 12 | 12 | 12 | 12 | 12 |
| | | Amount (parts by mass) | | 10 | 10 | 10 | 10 | 10 | 10 | 10 |

(continued)

| | | | | Example 9 | Example 10 | Example 11 | Comparative Example 1 | Comparative Example 2 | Comparative Example 3 | Comparative Example 4 |
|---|---|---|---|---|---|---|---|---|---|---|
| Binder A | Monomer chemical composition (mass%) | Methyl acrylate | | 20 | 20 | 20 | 20 | 20 | 20 | 20 |
| | | Vinyl acetate | | 80 | 80 | 80 | 80 | 80 | 80 | 80 |
| | Reductant | Type | | Ascorbic acid | | | Ascorbic acid | | | |
| | | Amount (parts by mass) | | 0.2 | 0.2 | 0.2 | 0.2 | 0.2 | 0.2 | 0.2 |
| | Alkali metal compound | Type | | LiOH | LiOH | LiOH | LiOH | LiOH | | LiOH |
| | | Amount (parts by mass) | | 50 | 50 | 50 | 50 | 50 | - | 50 |
| | Inclusion of hydroxy group/acidic functional group and alkali metal salt group | | | Yes | Yes | Yes | Yes | Yes | No | Yes |
| | Yellowness index (-) | | | 9.2 | 92 | 92 | 92 | 92 | 8.6 | 92 |
| | Amount (parts by mass) | | | 1.0 | 100 | 2.0 | 20 | 20 | 2.0 | 2.0 |
| Heat-resistant particles | Type | | | - | - | - | - | - | - | - |
| | Volume-average particle diameter ($\mu$m) | | | - | - | - | - | - | - | - |
| | Amount (parts by mass) | | | - | - | - | - | - | - | - |
| Evaluation | Adhesiveness after electrolyte solution immersion | | | B | A | B | D | C | C | A |
| | Electrolyte solution injectability | | | A | A | A | D | A | B | A |
| | Blocking resistance | | | A | B | B | A | A | A | C |
| | High-temperature cycle characteristics | | | B | A | B | D | C | C | A |
| | Rate characteristics | | | A | A | A | A | A | A | B |

EP 4 503 305 A1

30

It can be seen from Tables 1 and 2 that a functional layer having excellent blocking resistance and a non-aqueous secondary battery having excellent electrolyte solution injectability and high-temperature cycle characteristics were obtained in Examples 1 to 11 in which the used slurry composition for a functional layer contained a particulate polymer having a glass-transition temperature of not lower than 30°C and not higher than 95°C and a binder A including an alkali metal salt group and either or both of a hydroxy group and an acidic functional group.

In contrast, it can be seen that a functional layer having excellent blocking resistance and a non-aqueous secondary battery having excellent electrolyte solution injectability and high-temperature cycle characteristics were not obtained in Comparative Example 1 in which a specific particulate polymer was not compounded, Comparative Examples 2 and 4 in which a particulate polymer was compounded but had a glass-transition temperature outside of the specific range set forth above, and Comparative Example 3 in which a binder A did not include a hydroxy group and an alkali metal salt group.

INDUSTRIAL APPLICABILITY

According to the present disclosure, it is possible to provide a slurry composition for a non-aqueous secondary battery functional layer that is capable of providing a functional layer having excellent blocking resistance and that is also capable of providing a secondary battery in which high levels of both electrolyte solution injectability and high-temperature cycle characteristics can be realized.

Moreover, according to the present disclosure, it is possible to provide a separator for a non-aqueous secondary battery that has excellent blocking resistance and that makes it possible to realize high levels of both electrolyte solution injectability and high-temperature cycle characteristics of an obtained secondary battery.

Furthermore, according to the present disclosure, it is possible to provide a non-aqueous secondary battery having excellent electrolyte solution injectability and high-temperature cycle characteristics.

Also, according to the present disclosure, it is possible to efficiently produce the presently disclosed slurry composition for a non-aqueous secondary battery functional layer.

**Claims**

1. A slurry composition for a non-aqueous secondary battery functional layer comprising a particulate polymer and a binder A, wherein

   the particulate polymer has at least one glass-transition temperature of not lower than 30°C and not higher than 95°C, and
   the binder A includes an alkali metal salt group and either or both of a hydroxy group and an acidic functional group.

2. The slurry composition for a non-aqueous secondary battery functional layer according to claim 1, wherein the binder A is a copolymer of vinyl alcohol and an alkali metal-neutralized ethylenically unsaturated carboxylic acid.

3. The slurry composition for a non-aqueous secondary battery functional layer according to claim 1, wherein a 3 mass% aqueous solution of the binder A has a yellowness index of 14.0 or less.

4. The slurry composition for a non-aqueous secondary battery functional layer according to claim 1, wherein the particulate polymer has a volume-average particle diameter of not less than 0.25 $\mu$m and not more than 5 $\mu$m.

5. The slurry composition for a non-aqueous secondary battery functional layer according to claim 1, wherein the particulate polymer has a core-shell structure.

6. The slurry composition for a non-aqueous secondary battery functional layer according to claim 1, further comprising heat-resistant particles.

7. A separator for a non-aqueous secondary battery comprising: a separator substrate; and a functional layer formed on at least part of at least one surface of the separator substrate, wherein the functional layer is a dried product of the slurry composition for a non-aqueous secondary battery functional layer according to any one of claims 1 to 6.

8. A non-aqueous secondary battery comprising a positive electrode, a negative electrode, a separator, and an electrolyte solution, wherein the separator is the separator for a non-aqueous secondary battery according to claim 7.

9.  A method of producing the slurry composition for a non-aqueous secondary battery functional layer according to any one of claims 1 to 6, comprising polymerizing a monomer composition containing either or both of a vinyl ester monomer and an ethylenically unsaturated carboxylic acid ester monomer to obtain a polymer and further saponifying the polymer in the presence of an alkali metal compound and a reductant to obtain a saponified product of the polymer as the binder A.

| INTERNATIONAL SEARCH REPORT | International application No. |
|---|---|
| | **PCT/JP2023/009443** |

**A. CLASSIFICATION OF SUBJECT MATTER**

*H01M 50/449*(2021.01)i; *H01M 4/13*(2010.01)i; *H01M 10/0566*(2010.01)i; *H01M 50/403*(2021.01)i;
*H01M 50/414*(2021.01)i; *H01M 50/42*(2021.01)i; *H01M 50/443*(2021.01)i; *H01M 50/451*(2021.01)i
FI: H01M50/449; H01M50/443 M; H01M50/451; H01M10/0566; H01M50/414; H01M50/42; H01M50/443 C;
H01M50/443 E; H01M50/403 D; H01M4/13

According to International Patent Classification (IPC) or to both national classification and IPC

**B. FIELDS SEARCHED**

Minimum documentation searched (classification system followed by classification symbols)

H01M50/449; H01M4/13; H01M10/0566; H01M50/403; H01M50/414; H01M50/42; H01M50/443; H01M50/451

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-219358 A (JSR CORP.) 22 December 2016 (2016-12-22) entire text, all drawings | 1-9 |
| A | WO 2014/207967 A1 (SUMITOMO SEIKA CHEMICALS CO., LTD.) 31 December 2014 (2014-12-31) entire text, all drawings | 1-9 |
| A | JP 2015-008147 A (NATIONAL INST. OF ADVANCED INDUSTRIAL & TECHNOLOGY) 15 January 2015 (2015-01-15) entire text, all drawings | 1-9 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 May 2023** | **06 June 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2023/009443**

| Patent document cited in search report | | | Publication date (day/month/year) | Patent family member(s) | | | Publication date (day/month/year) |
|---|---|---|---|---|---|---|---|
| JP | 2016-219358 | A | 22 December 2016 | (Family: none) | | | |
| WO | 2014/207967 | A1 | 31 December 2014 | US | 2016/0156024 | A1 | |
| | | | | all | | | |
| | | | | EP | 3016180 | A1 | |
| | | | | CN | 105340110 | A | |
| | | | | KR | 10-2016-0024921 | A | |
| JP | 2015-008147 | A | 15 January 2015 | US | 2015/0280237 | A1 | |
| | | | | all | | | |
| | | | | WO | 2014/057627 | A1 | |
| | | | | EP | 2924785 | A1 | |
| | | | | CA | 2886569 | A | |
| | | | | CN | 104704662 | A | |
| | | | | KR | 10-2020-0119889 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6888139 B
- WO 2021172383 A1
- WO 2013151144 A1
- WO 2020175025 A1

- WO 2017168947 A1
- JP 2012204303 A
- JP 2013145763 A